# EUROPÄISCHE PATENTANMELDUNG

(11) **EP 4 321 060 A1**
(43) Veröffentlichungstag der Anmeldung: **14.02.2024**
(21) Anmeldenummer: 23191170.2
(22) Anmeldetag: 11.08.2023
(51) Int. Cl.: A47G 19/00, A47G 19/02, A47J 36/02, H05B 6/64

(54) **GESCHIRR FÜR MIKROWELLEN**

(30) Priorität: 11.08.2022 DE 102022120282
(71) Anmelder: Kleinpass, Bernd, 87459 Pfronten (DE)
(72) Erfinder: Kleinpass, Bernd, 87459 Pfronten (DE)
(74) Vertreter: Patentanwaltzkanzlei Hutzelmann

(57) **Zusammenfassung**

Geschirr (1), das heisst Platten, Teller, Tassen, Schüsseln oder dergleichen, zur Erwärmung von Material, insbesondere von Speisen, wobei das Geschirr zumindest partiell mit einem Mikrowellensuszeptor (4) ausgerüstet ist.

## Beschreibung

Die Erfindung bezieht sich auf Geschirr, das heisst Platten, Teller, Tassen, Schüsseln oder dergleichen, zur Erwärmung von Material, insbesondere von Speisen.

Konventionell wird Material, insbesondere Speisen entweder auf einem Herd, in einem Wärmeofen, insbesondere einem Backofen, oder in einem Mikrowellenofen erwärmt.

Es hat sich jedoch gezeigt, daß bei einer konventionellen Erwärmung diese aufgrund des meist großen zu erwärmenden Volumens und der Wärmezufuhr nur über die äußeren Oberflächen diese meist nur sehr langsam und ungleichmäßig erfolgt.

Bei Erwärmung des Materials in einem Mikrowellenofen kann das Material, sofern dafür geeignet, durch die Mikrowellenstrahlung direkt angeregt und erwärmt werden. Geeignetes Material kann dadurch sehr schnell und effizient erwärmt werden. Unnötiger Umgebungsraum wird nicht oder nur in geringem Umfang erwärmt. Ist das Material jedoch inhomogen, wie dies auch bei Lebensmitteln vorkommen kann und/oder es liegt eine inhomogene Verteilung der Mikrowellenstrahlung im Prozessraum vor, so kann es auch zu unerwünschten heißen und kalten Stellen kommen. Das starke Ankoppeln von Wasser und anderen Flüssigkeiten an die Mikrowellenstrahlung sorgt für ein unerwünschtes Austrocknen und eine Verminderung der Speisenqualität. Oftmals tritt jedoch bei Flüssigkeiten ein unerwünschter Siedeverzug auf.

Aufgabe der Erfindung ist es, ein Geschirr vorzuschlagen, welches eine gleichmäßige und schnelle Erwärmung vor allem in einem Mikrowellenofen ermöglicht und die vorgenannten Nachteile vermeidet.

Diese Aufgabe wird dadurch gelöst, daß das Geschirr zumindest partiell mit einem Mikrowellensuszeptor ausgerüstet ist.

Der Mikrowellensuszeptor nimmt die in den Mikrowellen enthaltene Energie auf und setzt diese in Wärme um, die an das zu erwärmende Gut abgegeben wird.

Dabei hat es sich als sehr vorteilhaft erwiesen, wenn der Mikrowellensuszeptor im Boden und/oder, soweit vorhanden, in den Wänden und/oder Deckeln oder dergleichen des Geschirrs angeordnet ist.

Hierdurch erfolgt eine gleichmäßige und effiziente Wärmeabgabe an das zu erwärmende Gut.

Weiterhin hat es sich als sehr vorteilhaft erwiesen, wenn Heizelemente vorgesehen sind, die entweder konventionell und/oder als Mikrowellensuszeptor ausgebildet sind.

Die Heizelemente können entweder ins Geschirr eingebettet oder daran angeordnet werden. Auch hierdurch erfolgt eine gleichmäßige Erwärmung. Es ist dabei denkbar, daß durch die Heizelemente eine Grundwärme erzeugt wird und die restliche Erwärmung durch den Mikrowellensuszeptor erfolgt.

Weiterhin hat es sich als sehr vorteilhaft erwiesen, wenn das Geschirr wenigstens partiell mit einer Abschirmung für Mikrowellenstrahlung ausgerüstet ist.

Hierdurch können Konstellationen erreicht werden, bei denen einerseits die Wärmezufuhr an das zu erwärmende Material durch die Heizelemente und/oder die Mikrowellensuszeptoren erfolgt und andererseits eine direkte Erwärmung durch Anregung des zu erwärmenden Materials durch die Mikrowellenstrahlung unterbunden oder auch teilweise zugelassen wird. Durch eine teilweise direkte Anregung des zu erwärmenden Materials durch die Mikrowellenstrahlung kann beispielsweise ein kombinierter Auftaueffekt erzielt werden. Die Wärmezufuhr durch die Heizelemente bzw. Mikrowellensuszeptoren kann auch zu Rösteffekten und der Erzeugung von Röstaromen genutzt werden. Unerwünschte und unkontrollierte thermische Effekte im zu erwärmenden Gut werden vermieden.

Dabei hat es sich als sehr vorteilhaft erwiesen, wenn die Abschirmung vorzugsweise auf der Innenseite, d.h. der dem zu erwärmenden Gut zugewandten Seite, angeordnet ist.

Damit wird einerseits eine gute Abschirmung des zu erwärmenden Gutes und andererseits auch eine gute und gleichmäßige Erwärmung desselben sichergestellt.

Äußerst vorteilhaft ist es gemäß einer Fortbildung der Erfindung auch, wenn das Geschirr mit einer Isolierung, vorzugsweise einer Wärmeisolierung, ausgerüstet ist.

Damit wird verhindert, daß Wärme nach außen abgestrahlt wird. Vielmehr gelangt die ganze Wärme zum zu erwärmenden Gut. Die Folge hiervon ist, daß deutlich weniger Energie zum aufheizen des zu erwärmenden Materials benötigt wird, was zu erheblichen Energieeinsparungen führt.

Dabei hat es sich als sehr vorteilhaft erwiesen, wenn die Isolierung vorzugsweise auf seiner Außenseite angeordnet ist.

Damit kann der Mikrowellenzuszeptor innerhalb der Isolierung angeordnet werden.

Gemäß einer Weiterbildung der Erfindung ist es auch sehr vorteilhaft, wenn das Geschirr aus einem hitzebeständigen Material gefertigt ist, wobei das Material auch beständig gegen Temperaturwechsel ausgebildet sein kann.

Damit ist es sehr gut möglich, das Geschirr mehrfach zu verwenden, ohne dass zu befürchten ist, daß das Geschirr kaputt geht.

Weiterhin hat es sich als äußerst vorteilhaft erwiesen, wenn das Geschirr aus einem gut wärmeleitenden Material gefertigt ist.

Dadurch wird die Wärme sehr gut auf das zu erwärmende Gut übertragen.

Sehr vorteilhaft ist es in diesem Zusammenhang, wenn das Geschirr aus Keramik, Porzellan, Glas, Kunststoffen oder dergleichen gefertigt ist.

All diese Materialien haben sich als gut geeignet erwiesen.

Eine weitere sehr vorteilhafte Fortbildung der Erfindung liegt vor, wenn der Suszeptor aus einer in das Geschirr eingebetteten Konstruktion und/oder einer Beschichtung gebildet ist, wobei die Konstruktion neben flächig auch punktuell angeordnet oder als Gitterkonstruktion ausgebildet sein kann und vorzugsweise aus Siliziumkarbid oder Graphit besteht.

Derartige Konstruktionen haben sich als besonders gut herstellbar und auch als sehr effizient erwiesen.

Eine weitere sehr vorteilhafte Ausgestaltung der Erfindung liegt vor, wenn die Abschirmung gegen Mikrowellenstrahlung aus einer in das Geschirr eingebetteten Konstruktion und/oder einer Beschichtung gebildet ist, wobei die Konstruktion neben flächig auch punktuell angeordnet oder als Gitterkonstruktion ausgebildet sein kann und vorzugsweise aus Metallen besteht.

Derartige Konstruktionen haben sich als besonders gut herstellbar und auch als sehr effizient erwiesen.

Weiterhin hat es sich gemäß einer weiteren Ausgestaltung der Erfindung als sehr vorteilhaft erwiesen, wenn der Suszeptor und/oder die Abschirmung durch eine Beschichtung gebildet ist, die Muster aufweisen kann.

Derartige Beschichtungen sind besonders einfach auf das Geschirr aufbringbar und ermöglichen so eine einfache Massenproduktion. Zudem lassen sich durch einen direkten Kontakt der zu erwärmenden Speisen beispielsweise Rösteffekte, ebenso wie Brat- und Backeffekte erzeugen, die vorteilhaft hinsichtlich Geschmack und Aussehen sind. Durch die Verwendung metallischer Materialien hierfür werden diese Effekte verstärkt. Die Verwendung strukturierter Beschichtungen ist denkbar.

Eine sehr vorteilhafte Weiterbildung der Erfindung liegt auch vor, wenn der Suszeptor teilweise oder auch vollständig undurchlässig für Mikrowellenstrahlung ausgebildet ist.

Damit absorbiert der Suszeptor den allergrößten Teil der auf ihn treffenden Mikrowellenstrahlung und setzt die darin enthaltene Energie in Wärme um.

Weiterhin hat es sich gemäß einer weiteren Fortbildung der Erfindung als sehr vorteilhaft erwiesen, wenn die Wärmeausdehnungskoeffizienten des Heizelements und/oder des Mikrowellensuszeptors wenigstens annährend dem des Geschirrmaterials entsprechen.

Hiermit werden schädigend hohe thermische Spannungen bei Erwärmung des Heizelements bzw. Suszeptors im Geschirrmaterial verhindert.

Ebenfalls sehr vorteilhaft hat es sich gemäß einer weiteren Ausgestaltung der Erfindung erwiesen, wenn der Mikrowellensuszeptor aus amorphem und/oder porösem Material gebildet ist.

Ist der Wärmeausdehnungskoeffizient des Geschirrmaterials kleiner wie dier des Mikrowellensuszeptors, so kann die amorphe Struktur den Unterschied ausgleichen. In diesem Zusammenhang hat es sich als sehr vorteilhaft erwiesen, wenn der Mikrowellensuszeptor aus granulärem Material gefertigt ist.

Die Abmessungen einzelner Körner eines granulären Materials sind vergleichsweise gering so daß Spannungen reduziert werden. Zudem können Hohlräume zwischen den Körnern für spannungsfreie thermische Ausdehnungen genutzt werden.

Äußerst vorteilhaft ist es gemäß einer weiteren Ausgestaltung der Erfindung auch, wenn der Mikrowellensuszeptor aus einem gesintertem Material gefertigt ist.

Durch den Sinterprozess bzw. durch die Glasverschmelzung lassen sich vielfältige Geometrien und Formen herstellen. Eine Abstimmung auf die jeweilige Anwendung ist ebenfalls zu realisieren.

Im folgenden wird die Erfindung anhand mehrerer Ausführungsbeispiele veranschaulicht.

Dabei zeigen:
- Fig. 1: eine schematische Darstellung eines erfindungsgemäßen Geschirrteils,
- Fig. 2: einen Schnitt durch das Geschirrteil,
- Fig. 3: eine Schnitt durch ein weiteres Geschirrteil mit Isolierung.

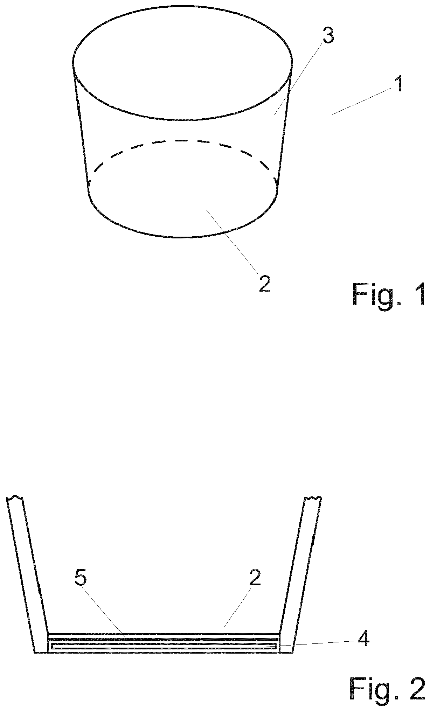

Mit 1 ist in Fig. 1 ein topfförmiges Geschirrteil bezeichnet, das einen Boden 2 und eine umlaufende Wand 3 aufweist.

Das Geschirrteil 1 ist zur Aufnahme von zu erwärmendem Gut vorgesehen.

In diesem Ausführungsbeispiel ist im Boden 2 ein Suszeptor 4 angeordnet, der in der Lage ist, die in Mikrowellenstrahlung enthaltene Energie in Wärme zu wandeln.

Damit erzeugt der Suszeptor 4 Wärme zur Erwärmung des zu erwärmenden Gutes, sobald dieser mit Mikrowellenstrahlung, beispielsweise in einem Mikrowellenofen beaufschlagt wird.

Das Geschirrteil 1 ist aus einem Material gefertigt, welches gegenüber starken Temperaturschwankungen resistent ist. Zu diesen Materialien gehören unter anderem Keramiken, Porzellan, Glas, Kunststoffe oder dergleichen. Wichtig ist, daß die Materialien einerseits Temperaturschwankungen aushalten können, beständig gegen die auftretenden Temperaturen und zudem für Mikrowellenstrahlung durchlässig sind.

Die auftretenden Temperaturen liegen meist im Bereich bis 300°C in Spitzen auch höher.

Zudem sollte das Material gut Wärmespannungen aufnehmen können. Die Wärmeausdehnungskoeffizient von Suszeptor und Geschirrteil sollten aufeinander abgestimmt sein. Zudem kann der Suszeptor aus amorphem bzw. porösem Material gefertigt sein. Durch die im amorphen bzw. porösen Material enthaltenen Hohlräume können Wärmespannungen wenigstens teilweise ausgeglichen werden. Alle Komponenten sollten ausreichend themrisch stabil ausgebildet sein, so daß es zu keinen schädlichen Effekten zwischen den Materialien während den thermischen Zyklen kommt.

Auch bei gesinterten Suszeptoren kann dieser Ausgleichsmechanismus genutzt werden.

Die im Suszeptor 4 erzeugte Wärme wird an das zu erwärmende Gut abgegeben. Bei entsprechender Positionierung des Suszeptors 4 können so auch Rösteffekte am zu erwärmenden Gut erzeugt werden. Die am zu erwärmenden Gut anliegende Temperatur ist dabei oftmals wenigstens partiell entsprechend hoch.

Um zu verhindern, daß die von außen einwirkende Mikrowellenstrahlung auch das zu erwärmende Gut durchdringt und dort vor allem zu unerwünschten und oftmals unkontrollierbaren Erwärmungseffekten führt, kann auf der Innenseite des Geschirrteils 1 eine Abschirmung 5 vorgesehen sein. Denkbar ist dabei, daß die Abschirmung 5 in das Geschirrteil 1 eingebettet ist, eine Einheit mit dem Suszeptor 4 bildet oder aber auch auf die Innenseite des Geschirrteils 1 aufgebracht ist.

Dabei kann die Abschirmung 5 aus einer Bedruckung, Beschichtung oder dergleichen bestehen. Denkbar sind aber auch anderweitige Konstruktionen. Ein Aufbau aus Metallen, die auch in Gitterstruktur angeordnet sein können, ist denkbar.

Die Abschirmung 5 kann dabei auf das zu erwärmende Gut abgestimmt sein. So ist auch eine teilweise Abschirmung 5 denkbar, so daß durch direkte Anregung auch Auftaueffekte im zu erwärmenden Gut genutzt werden können. Andererseits kann ein Wasserentzug aus dem zu erwärmenden Gut gesteuert bzw. verringert werden. Wasser koppelt bekanntlich ebenso wie viele anderen Flüssigkeiten sehr gut an Mikrowellenstrahlung an.

Der Suszeptor 4 kann beispielsweise aus einer in das Geschirr 1 eingebetteten Konstruktion und/oder einer Beschichtung bestehen, wobei die Konstruktion neben flächig auch punktuell angeordnet oder als Gitterkonstruktion ausgebildet sein kann und vorzugsweise aus Siliziumkarbid oder Graphit besteht. Ein granuläres, amorphes, poröses oder gesintertes bzw. verschmolzendes Material kann eingesetzt werden. Auch denkbar sind geschmolzene und/oder gepresste Materialien. Hierdurch wird auch die Oberfläche des Suszeptors vergrößert, so daß die im Suszeptor 4 erzeugte Wärme besser an das Geschirrmaterial und das zu erwärmende Gut übertragen werden kann. Metallische Materialien werden dabei in der Regel gesintert, Glasmaterialien in der Regel verschmolzen, was durch den englischen Begriff glasfusing bzw. Glasfusion charakterisiert wird.

Der Suszeptor 4 kann nicht nur, wie im Ausführungsbeispiel dargestellt, im Boden 2 des Geschirrteils 1 angeordnet sein. Es ist auch denkbar, daß Suszeptoren auch in Wänden oder in einem Deckel vorgesehen sind. Auch hier ist die Kombination mit einer Abschirmung 5 denkbar. Ebenfalls können die Suszeptoren 4 selbst undurchlässig oder teildurchlässig gegen Mikrowellenstrahlung ausgebildet sein. Hierbei ist entweder eine Reflexion der nicht absorbierten Mikrowellenstrahlung denkbar oder aber die eintreffende Mikrowellenstrahlung wird wenigstens annähernd vollständig absorbiert.

Zusätzlich zu den Suszeptoren 4 können nicht dargestellte konventionelle Heizelemente vorgesehen sein. Hier ist es sogar denkbar, daß einzelne Suszeptoren 4 gegen konventionelle Heizelemente auswechselbar ausgebildet sind.

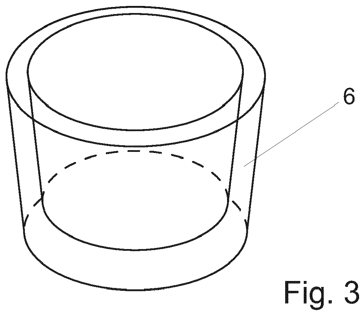

Desweiteren kann, wie in Fig. 3 dargestellt, eine Isolierung 6 vorgesehen sein, die in diesem Fall das Geschirrteil 1 auf seiner Außenseite umgibt.

Andere Ausgestaltungen der Isolierung 6 sind denkbar. Es ist auch denkbar, daß eine partielle Isolierung vorgesehen ist. Diese kann beispielsweise im Bereich der Suszeptoren 4 angeordnet sein, um zu verhindern, daß die erzeugte Wärme nach außen gelangt. Durch die Isolierung 6 wird die Wärme vielmehr gezielt ins Innere des Geschirrteils 1 geleitet und so das zu erwärmende Gut tatsächlich erwärmt. Der zu erwärmende Raum wird verringert und so das zu erwärmende Gut schnell und effizient erwärmt. Energie wird eingespart.

Bei dem zu erwärmenden Gut kann es sich um vielfältiges Material handeln. Oftmals wird das erfindungsgemäße Geschirr 1 jedoch zum Erwärmen von Speisen eingesetzt.

Es ist aber auch denkbar, daß das Geschirr 1 auch für andere auch technische Einsatzgebiete verwendung findet.

Es ist zum Beispiel auch denkbar, daß eine Platte in der Mikrowelle aufgeheizt wird, die als Warmhalteplatte oder zur Erwärmung von Tellern oder dergleichen eingesetzt wird.

## Patentansprüche

1. Geschirr (1), das heisst Platten, Teller, Tassen, Schüsseln oder dergleichen, zur Erwärmung von Material, insbesondere von Speisen, **dadurch gekennzeichnet, daß** das Geschirr zumindest partiell mit einem Mikrowellensuszeptor (4) ausgerüstet ist.

2. Geschirr nach Anspruch 1, **dadurch gekennzeichnet, daß** der Mikrowellensuszeptor (4) im Boden (2) und/oder, soweit vorhanden, in den Wänden (3) und/oder Deckeln oder dergleichen des Geschirrs (1) angeordnet ist.

3. Geschirr nach Anspruch 1 oder 2, **dadurch gekennzeichnet, daß** Heizelemente vorgesehen sind, die entweder konventionell und/oder als Mikrowellensuszeptor (4) ausgebildet sind.

4. Geschirr nach Anspruch 1, 2 oder 3, **dadurch gekennzeichnet, daß** das Geschirr (1) wenigstens partiell mit einer Abschirmung (5) für Mikrowellenstrahlung ausgerüstet ist.

5. Geschirr nach Anspruch 4, **dadurch gekennzeichnet, daß** die Abschirmung (5) vorzugsweise auf der Innenseite, d.h. der dem zu erwärmenden Gut zugewandten Seite, angeordnet ist.

6. Geschirr nach einem der vorangehenden Ansprüche, **dadurch gekennzeichnet, daß** das Geschirr (1) mit einer Isolierung (6), vorzugsweise einer Wärmeisolierung, ausgerüstet ist, wobei die Isolierung (6) vorzugsweise auf seiner Außenseite angeordnet sein kann.

7. Geschirr nach einem der vorangehenden Ansprüche, **dadurch gekennzeichnet, daß** das Geschirr (1) aus einem hitzebeständigen Material gefertigt ist, wobei das Material auch beständig gegen Temperaturwechsel ausgebildet sein kann.

8. Geschirr nach einem der vorangehenden Ansprüche, **dadurch gekennzeichnet, daß** das Geschirr (1) aus einem gut wärmeleitenden Material gefertigt ist.

9. Geschirr nach einem der vorangehenden Ansprüche, **dadurch gekennzeichnet, daß** das Geschirr (1) aus Keramik, Porzellan, Glas, Kunststoffen oder dergleichen gefertigt ist.

10. Geschirr nach einem der vorangehenden Ansprüche, **dadurch gekennzeichnet, daß** der Suszeptor (4) aus einer in das Geschirr (1) eingebetteten Konstruktion und/oder einer Beschichtung gebildet ist, wobei die Konstruktion neben flächig auch punktuell angeordnet oder als Gitterkonstruktion ausgebildet sein kann und vorzugsweise aus Siliziumkarbid oder Graphit besteht.

11. Geschirr nach einem der vorangehenden Ansprüche, **dadurch gekennzeichnet, daß** die Abschirmung (5) gegen Mikrowellenstrahlung aus einer in das Geschirr (1) eingebetteten Konstruktion und/oder einer Beschichtung gebildet ist, wobei die Konstruktion neben flächig auch punktuell angeordnet oder als Gitterkonstruktion ausgebildet sein kann und vorzugsweise aus Metallen besteht.

12. Geschirr nach einem der vorangehenden Ansprüche, **dadurch gekennzeichnet, daß** der Suszeptor (4) und/oder die Abschirmung (5) durch eine Beschichtung gebildet ist, die Muster aufweisen kann.

13. Geschirr nach einem der vorangehenden Ansprüche, **dadurch gekennzeichnet, daß** der Suszeptor (4) teilweise oder auch vollständig undurchlässig für Mikrowellenstrahlung ausgebildet ist.

14. Geschirr nach einem der vorangehenden Ansprüche, **dadurch gekennzeichnet, daß** die Wärmeausdehnungskoeffizienten des Heizelements und/oder des Mikrowellensuszeptors (4) wenigstens annährend dem des Geschirrmaterials entsprechen.

15. Geschirr nach einem der vorangehenden Ansprüche, **dadurch gekennzeichnet, daß** der Mikrowellensuszeptor (4) aus amorphem, porösem, granulärem und/oder gesintertem Material gebildet bzw. gefertigt ist.
